# EUROPÄISCHE PATENTSCHRIFT

(11) **EP 2 422 610 B1**
(45) Veröffentlichungstag und Bekanntmachung des Hinweises auf die Patenterteilung: **18.09.2013**
(21) Anmeldenummer: 10174429.0
(22) Anmeldetag: 27.08.2010
(51) Int. Cl.: A01D 46/04, A01D 47/00

(54) **Vorrichtung und Verfahren zum Pflücken von Blütenpflanzen**
Method and device for picking flowering plants
Dispositif et procédé destinés à la cueillette de plantes à fleurs

(43) Veröffentlichungstag der Anmeldung: 29.02.2012
(73) Patentinhaber: Leibniz-Institut für Agrartechnik Potsdam-Bornim e.V. (ATB), 14469 Potsdam (DE)
(72) Erfinder: Ehlert, Detlef, 14469 Potsdam (DE)
(74) Vertreter: Müller & Schubert

(56) Entgegenhaltungen:
- EP-A1- 0 256 994
- DD-A1- 145 487
- DD-A1- 231 475
- US-A- 1 629 831

## Beschreibung

Die Erfindung betrifft eine Vorrichtung und ein Verfahren zum Pflücken von Blütenpflanzen wie z. B. Kamille und Ringelblume.

Im Zusammenhang der vorliegenden Erfindung ist unter dem Pflücken von Blütenpflanzen das Pflücken der Blüten, auch Blütenkopf genannt, der jeweiligen Pflanze zu verstehen.

Die Problematik beim effektiven Pflücken von Blütenpflanzen ist nahezu identisch mit der Problematik, die beim Ernten von Getreidefruchtkörpern auftritt. Bei beiden Prozessen wird das selektive Sammeln nur eines Teils der betreffenden Pflanze, nämlich der Blüte oder des Fruchtkörpers angestrebt. Der Unterschied besteht in der größeren Empfindlichkeit von Blüten im Vergleich zu Getreidefruchtkörpern bei mechanischer Einwirkung. Die erfindungsgemäße Vorrichtung ist derart gestaltet, dass den speziellen Erfordernissen bei der Ernte von empfindlichem Erntegut wie Blüten Rechnung getragen wird. Die erfindungsgemäße Vorrichtung kann jedoch auch zur Ernte von Getreidefruchtkörpern verwendet werden.

Im Stand der Technik werden verschiedene Vorrichtungen zum Pflücken von Blütenpflanzen beschrieben. Hierbei finden sowohl manuell zu verwendende Vorrichtungen als auch maschinell betriebene Vorrichtungen Anwendung. Die maschinell betriebenen Pflückvorrichtungen können sowohl durch die Kombination eines Pflückvorsatzes mit einem herkömmlichen landwirtschaftlichen Fahrzeug, wie einem Traktor, als auch als selbst fahrende Vorrichtung ausgestaltet sein.

Die Qualität einer Pflückvorrichtung für Blütenpflanzen kann durch den Abpflückgrad, die Qualität der gepflückten Blüten, die Flächenleistung und die Mengen- und Qualitätsverluste nach dem Pflückvorgang bewertet werden.

Unter der Qualität der gepflückten Blüten ist das Verhältnis zwischen Blüten und unerwünschten Komponenten im Pflückgut zu verstehen. Zu den unerwünschten Komponenten zählen Stängel und Blätter. Je geringer die Anteile an unerwünschten Komponenten sind, umso höher ist die Qualität des Pflückguts.

Die Flächenleistung besagt, welche Fläche des Pflückareals in einem bestimmten Zeitraum, beispielsweise einer Stunde, abgepflückt werden kann.

Mengen- und Qualitätsverluste nach dem Pflückvorgang können beispielsweise dadurch entstehen, dass die Blüten durch mechanische Einwirkung bei einer in der Vorrichtung stattfindenden Bearbeitung, zum Beispiel in einem Schritt zur Abtrennung des Stängels, beim Entfernen der Blüten aus Vorrichtungsteilen, beim Transport innerhalb der Vorrichtung oder bei der Zwischenlagerung beschädigt (Qualitätsverlust) und sogar für die weitere Verwendung unbrauchbar werden (Mengenverlust).

Es sind bereits Vorrichtungen zum Pflücken von Blüten bekannt, welche Kammleisten aufweisen. Diese Kammleisten findet man sowohl an so genannten Handkämmen als auch an maschinell betriebenen Pflückvorrichtungen.

So offenbaren die Schutzrechte DE 1819617 U, DD 69479, DE 2546540 A1, DD 145487 und DD 231475 A1 Pflückvorrichtungen, welche mit Kammleisten versehene rotierbare Trommeln aufweisen. Während des Pflückvorgangs rotieren die mit den Kammleisten versehenen Trommeln und die Kammleisten durchkämmen den Blütenhorizont. Dabei gleiten die Stängel der Blütenpflanzen in den Zwischenräumen zwischen den Zähnen entlang bis die Blüte erreicht ist. Die Kämme sind hierbei derart gestaltet, dass der durch den Abstand der Kammzähne gebildete Spalt kleiner ist als der Blütenkopf. Da die Blüte dicker ist als der Spalt zwischen den Zähnen, wird eine Zugkraft auf den Stängel ausgeübt und dieser an der schwächsten Stelle abgerissen.

Nur im Idealfall, der während des Pflückvorgangs selten eintritt, reißt hierbei der Stängel unmittelbar unter der Blüte. In den meisten Fällen verbleiben an den gepflückten Blüten Reste der Stängel. Unter ungünstigen Bedingungen kann es sogar zum Herausreißen ganzer Pflanzen aus dem Boden kommen.

Zur Abtrennung der noch an der Blüte befindlichen Stängel sind in der Vorrichtung der DD 145487 Abstreifer vorhanden. Die im Kamm befindlichen Blüten werden mittels des Abstreifers gegen den Kammgrund gedrückt, um somit ein Abscheren der verbliebenen Stängel unmittelbar an der Blüte zu bewirken. Aufgrund von bei dieser Lösung auftretenden Spalten zwischen Abstreifer und Kamm, werden nicht von allen Blüten die Stängel abgeschert. Dadurch und durch die auf die Blüten ausgeübten Scherkräfte ist die Qualität der gepflückten Blüten gemindert.

Die abgetrennten Blüten fallen bei der Vorrichtung der DD 145487 anschließend, infolge der Schwerkraft, nach unten in eine Sammelmulde, um mittels Förderschnecke und Elevator in einen Sammelbehälter befördert zu werden.

Dies trifft ebenfalls für die in Patentschrift DD 69479 vorgeschlagene Vorrichtung zu, die zusätzlich für jeden Pflückkamm rotierende Bürsten benutzt, um die abgeschnittenen Blüten vom Pflückkamm in Sammelmulden zu fördern. Nachteilig ist bei der Vorrichtung der DD 69479, dass der Einsatz rotierender Bürsten mit einem vergleichsweise hohen technischen Aufwand verbunden ist. Weiterhin verschleißen die Bürsten im Laufe der Zeit und müssen bei Bedarf ersetzt werden. Ein weiteres Problem ist die Gefahr, dass sich längere Pflanzenteile in den Bürsten verwickeln und dadurch Störungen des Betriebs der Vorrichtung auftreten können.

Aufgrund der mechanischen Einwirkung der Bürsten auf die Blüten kommt es zusätzlich zu einem Mengen- und Qualitätsverlust bei den gepflückten Blüten.

Damit gewährleistet ist, dass die Blüten aus den Kämmen beziehungsweise in den Sammelmulden nach unten fallen können, darf eine Grenzdrehzahl der Pflücktrommel bei den bisher bekannten, nach innen abgebenden Vorrichtungen, nicht überschritten werden. Die Grenzdrehzahl ist die Drehzahl der Pflücktrommel, bei welcher die auf die Blüte einwirkende, durch die Rotation der Trommel erzeugte Zentrifugalkraft größer ist als die auf die Blüte wirkende Erdanziehungskraft. Um eine hinreichend sichere Abgabe der Blüten zu gewährleisten, beträgt die praktizierte Trommeldrehzahl weniger als 30 Umdrehungen pro Minute. Nach innen abgebend bedeutet hierbei, dass die Blüten innerhalb der Vorrichtung aufgefangen werden. Aufgrund der Bedingung, dass diese Trommeldrehzahl nicht überschritten werden darf, wird die Flächenleistung der Vorrichtungen stark eingeschränkt.

Eine Vorrichtung mit einem speziellen Mechanismus zum Auswerfen der Blüten aus dem Pflückmechanismus wird in der DD 231475 A1 offenbart. Die Blüten werden hierbei aus der Vorrichtung heraus befördert, also nicht in deren Innerem gesammelt. Die in diesem Schutzrecht offenbarte Vorrichtung weist auf einer Trommel angebrachte Pflückmechanismen auf. Diese Pflückmechanismen umfassen Zinkenkulissen, welche einen starren Pflückzinken, ein Blütenstielmesser und einen beweglichen Pflückzinken aufweisen. Gemäß der Offenbarung haben die Pflückzinken die Aufgabe, bei der Drehbewegung der Trommel von unten her in den Blütenhorizont der Kamille oder anderer Blütendrogen zu greifen und die Blütenstiele zwischen die in gleichmäßigen Abständen parallel stehenden leicht nach vorne geneigten Pflückzinken gleiten zu lassen. Bei fortschreitender Drehbewegung werden die Blüten am Blütenstielmesser vom Stiel abgetrennt. Durch die Drehung der Zinkenwelle werden die beweglichen Pflückzinken gespreizt, was zum Abwerfen der gepflückten Blüten entgegen der Fahrtrichtung nach außen führt. Das Spreizen der Pflückzinken nach dem Pflückvorgang bewirkt die Freigabe des Pflückgutes und ermöglicht dessen Abwerfen aus der Vorrichtung.
Im Gegensatz zur erfindungsgemäßen Vorrichtung handelt es sich also nicht um eine nach innen abgebende Vorrichtung. Weiterhin nachteilig ist bei dieser Lösung der erhebliche technische Aufwand sowie die Verschleißneigung der radialen Kurvenbahn zur Erzeugung der Spreizbewegung.

Aufgabe der vorliegenden Erfindung ist es deshalb, die Nachteile des Standes der Technik zu überwinden.

Die Aufgabe der vorliegenden Erfindung wird durch die Bereitstellung einer Vorrichtung zum Pflücken von Blütenpflanzen gelöst, umfassend die Mermale des Anspruchs 1.

Erfindungsgemäß bevorzugt ist eine Vorrichtung, die dadurch gekennzeichnet ist, dass der Anstellwinkel zwischen der auf der Pflücktrommel angeordneten Pflückkammanordnung 1 und der Pflücktrommel einstellbar ist und die Pflückkammanordnung 1 in dieser eingestellten Position arretierbar ist.

Weiterhin bevorzugt ist eine Vorrichtung, bei welcher die Pflücktrommel mehr als ein Trommelsegment auf gleicher Achse umfasst.

In einer bevorzugten Ausführungsform der Erfindung sind die Kammleisten 1a, 1b in der voreinstellbaren Position mittels eines verstellbaren Anschlags fixierbar.

Erfindungsgemäß bevorzugt ist eine Vorrichtung die dadurch gekennzeichnet ist, dass eine Kammleiste oder beide Kammleisten aus der voreinstellbaren Position und in diese zurück mittels Axialkurvenführung und Rückholfeder bewegbar ist beziehungsweise sind.

Weiterhin bevorzugt ist eine Vorrichtung die dadurch gekennzeichnet ist, dass die Anordnung zum Steuern der Fallbahn der Blüten ein mechanischer Abstreifer, eine Vorrichtung zur Erzeugung eines Unterdrucks und/oder Überdrucks, eine Leitschaufel oder eine Kombination davon umfasst.

In einer weiteren bevorzugten Ausführungsform umfasst die Vorrichtung mindestens eine Anordnung zur automatischen Steuerung der Pflückhöhe.

Bevorzugt ist auch eine Vorrichtung die dadurch gekennzeichnet ist, dass die Anordnung zur automatischen Steuerung der Pflückhöhe berührungslos messende Sensoren wie Ultraschall- oder Lasersensoren und/oder mindestens ein Pendel in Kombination mit mindestens einer Vorrichtung zur Winkelmessung umfasst.

Erfindungsgemäß besonders bevorzugt ist eine Vorrichtung, die weiterhin Mittel zum Transport von Pflanzenteilen, die keine Blüten sind, aus der Vorrichtung heraus umfasst.

In einer weiteren bevorzugten Ausführungsform der Erfindung umfasst die Vorrichtung weiterhin Mittel zum Transport der Blüten in eine Sammelvorrichtung.

Bevorzugt ist eine Vorrichtung, bei der die Mittel zum Transport Förderschnecken, Gebläse und/oder Gurtbandförderer umfassen.

In einer besonders bevorzugten Ausführungsform der Erfindung ist die Vorrichtung dadurch gekennzeichnet, dass an der rotierbaren Pflücktrommel Zinken angebracht sind.

Besonders bevorzugt ist eine Vorrichtung, die weiterhin eine Antriebsvorrichtung umfasst oder mit einer Antriebsvorrichtung koppelbar ist.

Die Aufgabe der Erfindung wird weiterhin gelöst durch die Bereitstellung eines Verfahrens zum Pflücken von Blütenpflanzen mit den Merkmalen des Anspruchs 14.

Eine bevorzugte Ausführungsform des erfindungsgemäßen Verfahrens ist dadurch gekennzeichnet, dass man vor und/oder während der Durchführung des Schritts b) den Abstand der Pflückkammanordnung vom Boden einstellt.

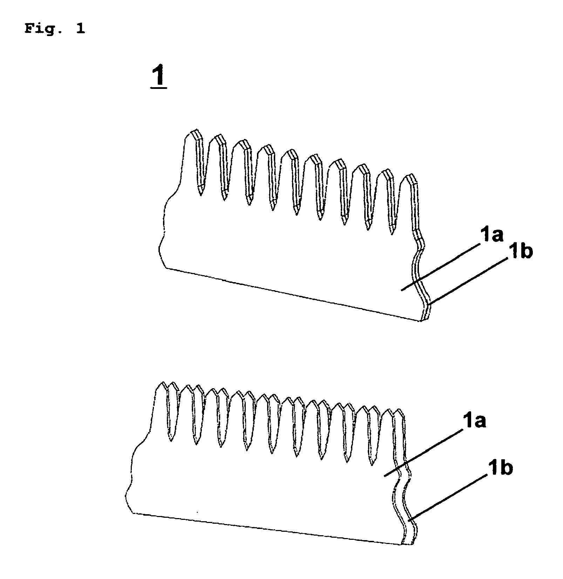

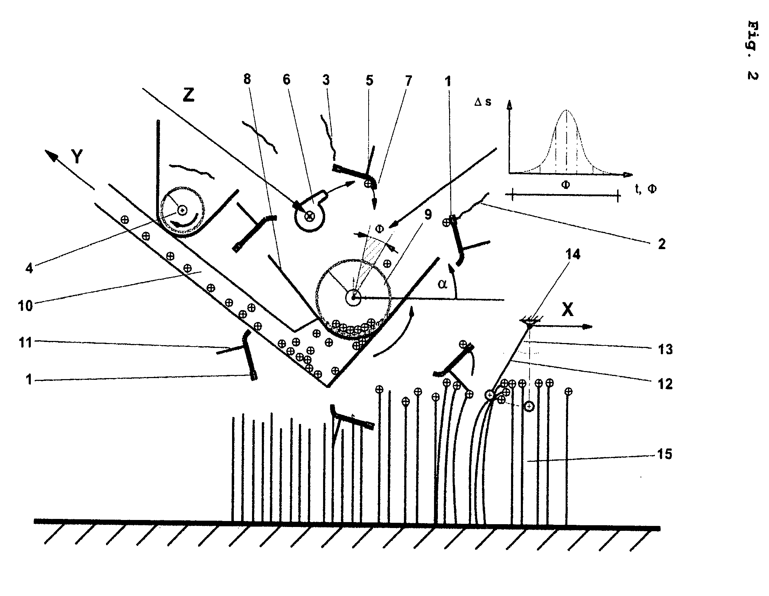

Die Erfindung wird nachfolgend anhand bevorzugter Ausführungsformen und unter Bezugnahme auf die beigefügten Figuren 1 und 2 detailliert erläutert.

Es zeigt Fig. 1 die Pflückkammanordnung 1 mit den Kammleisten 1a und 1b. Im oberen Teil der Fig. 1 ist die Pflückkammanordnung 1 in einer Position gezeigt, in welcher das Abpflücken der Blüten erfolgen kann. Im unteren Teil der Fig. 1 ist die Pflückkammanordnung 1 mit den Kammleisten 1a, 1b in einer Position gezeigt, bei welcher das Abscheren der Stängel von der Blüte erfolgen kann.

Fig. 2 veranschaulicht die Funktionsweise der erfindungsgemäßen Vorrichtung und das erfindungsgemäße Verfahren, das mittels der Vorrichtung durchgeführt wird. Es wird der gesamte Pflück-Zyklus vom Einfahren der Vorrichtung in den Pflanzenbestand 15 bis zum Sammeln der Blüten dargestellt. Hierbei wird jeweils die Position der Pflückkammanordnung 1 gezeigt. Die Phase, in welcher das Abscheren der Stängel von den Blüten erfolgt wird zusätzlich durch eine im oberen, rechten Bereich der Fig. 2 angeordnete graphische Darstellung, nachfolgend als Bewegungsschaubild bezeichnet, veranschaulicht.

Erfindungsgemäß besteht die Pflückvorrichtung aus mindestens einer auf der Mantelfläche der Pflücktrommel in Richtung der Drehachse der Pflücktrommel angeordnete Pflückkammanordnung 1 mit zwei im Wesentlichen unmittelbar übereinander liegenden Kammleisten 1a, 1b. Diese Pflückkammanordnung 1 ist in Fig. 1 gezeigt.

Jede Pflückkammanordnung 1 umfasst zwei gleichgerichtet im Wesentlichen übereinander liegend angeordnete und in Richtung der Drehachse der Pflücktrommel parallel zueinander verschiebbare Kammleisten 1a, 1b.

Während des Pflückvorgangs, der vorrangig im in Figur 2 gezeigten Winkelbereich 270° ≤ α ≤ 360° stattfindet, befindet sich die Pflückkammanordnung 1 in der voreingestellten Position. Diese voreingestellte Position kann je nach zu pflückendem Gut gewählt werden. Dadurch kann die Vorrichtung durch Einstellen der Zwischenräume zwischen den Zähnen der Pflückkammanordnung auf die Größe der zu pflückenden Blüten angepasst werden.

Die Lage der beiden Kammleisten 1a, 1b in der voreingestellten Position ist derart fixierbar, dass jede weitere Bewegung der Kammleisten 1a, 1b, nur noch zu einer Verringerung der Zwischenräume zwischen den Zähnen der Pflückkammanordnung 1 führen kann. Die Fixierung kann unter Verwendung von im Stand der Technik bekannten Mitteln wie beispielsweise einem Anschlag, erfolgen. Die Bewegung der Kammleisten 1a, 1b zueinander ist in dem in Fig. 2 gezeigten Bewegungsschaubild als Δ S gekennzeichnet.

Aus dieser voreingestellten Position kann die Pflückkammanordnung 1 reversibel in eine Position überführt werden, bei welcher der Zwischenraum zwischen den Zähnen der Pflückkammanordnung 1 verringert ist. In dieser Position findet das Abscheren statt.

Aus dieser Position gelangt die Pflückkammanordnung 1 zurück in die voreingestellte Position. Diese Rückführung kann selbsttätig erfolgen.

Bei Durchführung einer kurzhubigen Bewegung innerhalb der Pflückkammanordnung 1 werden die Kammleisten 1a, 1b aus ihrer voreingestellten Position in eine Position überführt, in welcher der Zwischenraum zwischen den Zähnen verringert ist.

Die Kammleisten 1a, 1b wirken bei dieser Bewegung wie eine Schere und es kommt zum Abscheren von im Zwischenraum der Zähne befindlichen Pflanzenteilen. Durch die kurzhubige Bewegung kann die Pflückkammanordnung 1 nach dem Abscheren ohne weitere Manipulation in die voreingestellte Position zurückgeführt werden.

Erfindungsgemäß kann die Position, in welcher der Zwischenraum zwischen den Zähnen verringert ist, sowohl durch Bewegung der Kammleiste 1a als auch durch eine Bewegung der Kammleiste 1b erreicht werden. Weiterhin kann diese Position durch die gegenläufige Bewegung beider Kammleisten 1a und 1b erfolgen. In den Ausführungsformen, bei welchen nur eine Kammleiste 1a oder 1b bewegbar sein soll, ist die jeweils andere Kammleiste der Pflückkammanordnung fixiert.

Die Pflückkammanordnung 1 ist in Fig. 1 in zwei möglichen Positionen gezeigt. Bei der im oberen Bereich der Fig. 1 gezeigten Pflückkammanordnung 1 sind beide Kammleisten 1a und 1b deckungsgleich übereinander positioniert. Diese Position ist ein Beispiel für eine voreingestellte Position, wie sie oben beschrieben wird.

Das oben erläuterte Verschieben der Kammleisten 1a, 1b der Pflückkammanordnung 1 ist im unteren Bereich der Fig. 1 gezeigt. Die Kammleisten 1a, 1b sind im Vergleich zur darüber gezeigten Pflückkammanordnung 1 nicht mehr deckungsgleich, sondern parallel zueinander verschoben. Der zwischen den Zähnen der Pflückkammanordnung 1 vorliegende Abstand ist im Vergleich zur oben gezeigten Pflückkammanordnung 1 verringert. In dieser unten gezeigten Position kann ein Abscheren von zwischen den Zähnen befindlichen Materialien stattfinden.

Nachfolgend wird die Funktionsweise der erfindungsgemäßen Pflückvorrichtung bei dem Pflücken von Blütenpflanzen unter Bezugnahme auf Fig. 2 detailliert erläutert. Analog kann auch das Ernten von Getreidefruchtkörpern erfolgen.

Die im rechten, oberen Bereich der Fig. 2 gezeigte graphische Darstellung veranschaulicht die Bewegung der Kammleisten 1a, 1b in Abhängigkeit vom gezeigten Winkel Φ.

Im Gegensatz zu den bekannten Lösungen rotiert die Pflücktrommel erfindungsgemäß mit einer Drehzahl deutlich oberhalb der Grenzdrehzahl. Infolge der wirkenden hohen Zentrifugalkraft richten sich die an der Blüte verbliebenen Stängel 2 annähernd radial nach außen aus. Nachdem der Pflückvorgang im Blütenhorizont abgeschlossen ist und die Blüte mit dem verbliebenen Stängel die Umfangsgeschwindigkeit der Pflücktrommel erreicht hat, wird in dem in Fig. 2 dargestellten Winkelbereich 45° ≤ α ≤ 90° in die Pflückkammanordnung 1 eine kurzhubige Bewegung quer zur Fahrt- bzw. Pflückrichtung von mindestens einer halben Zahnteilung eingeleitet. Die Fahrtrichtung ist in Fig. 2 als mit "X" gekennzeichneter Pfeil eingezeichnet. Diese Bewegung kann durch jedes im Stand der Technik bekannte Mittel erfolgen. In einer bevorzugten Ausführungsform der Erfindung wird diese Bewegung mittels Axialkurvenführung und Rückholfeder bewirkt.

Durch diese Bewegung wird der Stängel zwangsweise unmittelbar unter dem Blütenkopf abgeschnitten. Die nun abgetrennten Stängel 3 bewegen sich auf einer parabelförmigen Flugbahn nach oben und entgegengesetzt der Fahrtrichtung X. Die abgeschnittenen Stängel bewegen sich bei dieser Ausführungsform in eine Querförderschnecke 4, durch die sie in der Fahrspur des Erntefahrzeuges abgelegt werden können, um nicht sich anschließende Pflückvorgänge zu behindern. Da infolge der auf die abgetrennte Blüte 5 wirkenden hohen Zentrifugalkraft ein durch die Schwerkraft bewirktes Herunterfallen nicht stattfinden kann, wird ein mit einem Gebläse erzeugter Luftstrom 6 im Zusammenwirken mit einer entsprechend geformten Leitschaufel 7 verwendet. In der gezeigten Ausführungsform dient die Leitschaufel 7 gleichzeitig als Träger der Pflückkammanordnung 1. Nachdem die abgetrennte Blüte 5 durch die Blaswirkung des Luftstromes die Leitschaufel 7 verlassen hat, fällt sie infolge der Schwerkraft in eine Sammelmulde 8, um mittels Förderschnecke 9 und Gebläseförderer 10 in einen Sammelbehälter abtransportiert zu werden. Vorzugsweise wird der Einsatz eines Saug-Druckgebläses vorgeschlagen, mit dem saugseitig ein Unterdruck in einem Sammelbehälter erzeugt wird, aus dem über die Saugleitung des Gebläseförderers 10 die abgepflückten Blüten von der Förderschnecke 9 übernommen werden. Durch den Einsatz entsprechender Förderleitungen wird gleichzeitig die Druckseite des Gebläses genutzt, um den Luftstrom 6 zu erzeugen, der die abgetrennten Blüten 5 über die Leitschaufel 7 in die Sammelmulde 8 des Pflückvorsatzes fördert.

In einer bevorzugten Ausführungsform der Erfindung kann der zwischen Pflücktrommel und Pflückkammanordnung 1 gebildete Anstellwinkel eingestellt werden. So kann der Anstellwinkel je nach Bedarf, beispielsweise in Abhängigkeit von den zu pflückenden Pflanzen, gewählt werden. In der gewählten Position ist die Pflückkammanordnung dann an der Pflücktrommel arretierbar. Dieser optimierte Anstellwinkel kann während des gesamten Erntevorgangs beibehalten werden.

In einer weiteren, erfindungsgemäß bevorzugten Ausführungsform umfasst die Pflücktrommel mehr als ein Trommelsegment auf gleicher Achse, was am Beispiel einer aus zwei Trommelhälften bestehenden Pflücktrommel nachfolgend ausgeführt wird.

Um zu erreichen, dass eine maximale Pflückbreite im Verhältnis zur Gesamtbreite der Vorrichtung erreicht werden kann, umfasst die Vorrichtung zwei Trommelhälften auf gleicher Achse mit mittiger Abgabe des Entegutes in die Saugleitung des Gebläses. Da bei dieser Anordnung ein schmaler Streifen nicht von den Pflückkämmen erfasst werden kann, wird ein Halmteiler unmittelbar vor den Pflücktrommelhälften und hinter dem Pendel angebracht. Dieser biegt die Halme der Blütenpflanzen im nicht erreichbaren Bestandstreifen auseinander und führt sie so dem wirksamen Bereich der Pflücktrommeln zu.

Um Pflanzenbestände mit Wirrlage der Halme verlustarm und mit hoher Fahrgeschwindigkeit pflücken zu können ist es weiterhin erfindungsgemäß bevorzugt, dass an der Pflücktrommel federnde Zinken 11 angebracht sind. Diese bewirken unmittelbar vor dem Pflückvorgang eine Ausrichtung der Pflanzenhalme und erleichtern somit das Durchdringen des Pflanzenbestandes mit den nachfolgenden Pflückkämmen.

In einer darüber hinaus bevorzugten Ausführungsform der Erfindung weist die erfindungsgemäße Vorrichtung weiterhin eine Anordnung zur automatischen Anpassung an die Pflanzenhöhe auf.

Erfahrungen zeigen, dass die Höhe des Blütenhorizonts innerhalb eines Feldes sehr stark variieren kann. Eine manuelle Anpassung der Höhe des Pflückvorsatzes während des Pflückvorgangs beziehungsweise Erntevorgangs ist ungenau und führt zu einer hohen Belastung des Maschinenbedieners.

Wird keine Anpassung an die Höhe des Pflanzenhorizonts vorgenommen, so kann es deshalb zu einer schlechteren Qualität der gepflückten Blüten kommen. Das ist der Fall, wenn die Vorrichtung zu niedrig in Bezug auf die Pflanzenhöhe eingestellt ist. In diesem Fall werden überdurchschnittlich viele unerwünschte Komponenten gepflückt, was sich negativ auf die Qualität der gepflückten Blüten auswirkt. Hingegen hat eine zu hohe Einstellung der Vorrichtung eine negative Auswirkung auf den Abpflückgrad. Findet eine manuelle Einstellung der Pflückhöhe statt, so wird sich der Zeitaufwand bei der kontinuierlichen Überwachung der Pflanzenhöhe und der als Konsequenz gegebenenfalls zu erfolgenden Einstellung der Vorrichtung negativ auf die Flächenleistung auswirken.

In einer bevorzugten Ausführungsform der vorliegenden Erfindung umfasst die Anordnung zur automatischen Anpassung an die Pflanzenhöhe berührungslos messende Sensoren. Hierbei kann die Vorrichtung z. B. Ultraschall- oder Lasersensoren umfassen. Diese Sensoren ermitteln die Pflanzenhöhe und übertragen diese Information an eine Regeleinheit, welche die Höhe der Pflücktrommel in Bezug auf die ermittelte Pflanzenhöhe anpasst.

In einer weiteren bevorzugten Ausführungsform wird die Anordnung zur automatischen Anpassung an den Pflückhorizont mit mechanischen Komponenten realisiert.

Die Anordnung umfasst in einer Ausführungsform der Erfindung ein Pendel 12, welches während der Fahrt durch den Widerstand der Blütenpflanzen um einen vorgegebenen Soll-Winkelbereich 13 ausgelenkt wird. Dieser Soll-Winkelbereich wird im Drehpunk 14 gemessen. Zur Messung des Soll-Winkelbereichs kann die Anordnung ein Potentiometer umfassen. Dieser Messwert wird an eine Regeleinheit übertragen. Auf Basis der ermittelten Winkelinformation kann bei Bedarf eine automatische Anpassung der Höhe der Pflücktrommel vorgenommen werden. Das heißt, dass bei geringerer Pflanzenhöhe die Pflücktrommel automatisch bis auf den Soll-Winkelbereich 13 abgesenkt wird und bei ansteigender Pflanzenhöhe angehoben, so dass immer mit optimaler Pflückhöhe geerntet werden kann.

In einer insbesondere bevorzugten Ausführungsform umfasst die Vorrichtung zur automatischen Anpassung an den Pflückhorizont sowohl berührungslos messende Sensoren als auch mechanische Mittel.

Fig. 2 zeigt schematisch die Funktionsweise der ein Pendel 12 umfassenden Vorrichtung. Gezeigt werden Pendel 12, Soll-Winkelbereich 13 und Drehpunkt 14.

### Bezugszeichenliste

- 1: Pflückkammanordnung
- 1a / 1b: Kammleisten
- 2: Stängel, an Blüte verblieben
- 3: Stängel, von Blüte abgetrennt
- 4: Querförderschnecke
- 5: Blüte, vom Stängel abgetrennt
- 6: Luftstrom
- 7: Leitschaufel
- 8: Sammelmulde
- 9: Förderschnecke
- 10: Gebläseförderer
- 11: Zinken
- 12: Pendel
- 13: Soll-Winkelbereich
- 14: Drehpunkt
- 15: Pflanzenbestand
- X: Fahrtrichtung
- Y: zum Saug-Druck-Gebläse
- Z: vom Saug-Druck-Gebläse

## Patentansprüche

1. Vorrichtung zum Pflücken von Blütenpflanzen, umfassend mindestens eine rotierbare Pflücktrommel und mindestens eine Anordnung zum Steuern der Fallbahn der Blüten,
**dadurch gekennzeichnet, dass** die Vorrichtung
a) mindestens eine auf der Mantelfläche der Pflücktrommel in Richtung der Drehachse der Pflücktrommel angeordnete Pflückkammanordnung (1) umfasst,
wobei jede Pflückkammanordnung (1) zwei gleichgerichtet übereinander liegend angeordnete und in Richtung der Drehachse der Pflücktrommel parallel zueinander verschiebbare Kammleisten (1a, 1b) umfasst,
wobei die Kammleisten (1a, 1b) im Wesentlichen deckungsgleich übereinander oder versetzt zueinander anordenbar sind,
und dass der Zwischenraum zwischen den Zähnen der Pflückkammanordnung (1) voreinstellbar ist und sich in Abhängigkeit vom Drehwinkel der rotierbaren Pflücktrommel derart verändert, dass der voreingestellte Zwischenraum sich bei einem Umlauf der Trommel verringert und sich wieder zum voreingestellten Zwischenraum einstellt,
und die Vorrichtung weiterhin
b) mindestens eine Anordnung (8) zum Sammeln der Blüten umfasst
und
c) die mindestens eine Anordnung zum Steuern der Fallbahn der Blüten, eine Anordnung zum Steuern der Fallbahn der Blüten aus der mindestens einen Pflückkammanordnung (1) ist.

2. Vorrichtung gemäß Anspruch 1, **dadurch gekennzeichnet, dass** der Anstellwinkel zwischen der auf der Pflücktrommel angeordneten Pflückkammanordnung (1) und der Pflücktrommel einstellbar ist und die Pflückkammanordnung (1) in dieser eingestellten Position arretierbar ist.

3. Vorrichtung gemäß Anspruch 1 oder 2, **dadurch gekennzeichnet, dass** die Pflücktrommel mehr als ein Trommelsegment auf gleicher Achse umfasst.

4. Vorrichtung gemäß einem der vorangehenden Ansprüche, **dadurch gekennzeichnet, dass** die Kammleisten (1a, 1b) in der voreinstellbaren Position mittels eines verstellbaren Anschlags fixierbar sind.

5. Vorrichtung gemäß einem der vorangehenden Ansprüche, **dadurch gekennzeichnet, dass** eine Kammleiste (1a, 1b) oder beide Kammleisten (1a, 1b) aus der voreinstellbaren Position und in diese zurück mittels Axialkurvenführung und Rückholfeder bewegbar ist beziehungsweise sind.

6. Vorrichtung gemäß einem der vorangehenden Ansprüche, **dadurch gekennzeichnet, dass** die Anordnung zum Steuern der Fallbahn der Blüten ein mechanischer Abstreifer, eine Vorrichtung zur Erzeugung eines Unterdrucks und/oder Überdrucks, eine Leitschaufel (7) oder eine Kombination davon umfasst.

7. Vorrichtung gemäß Anspruch einem der vorangehenden Ansprüche, **dadurch gekennzeichnet, dass** die Vorrichtung mindestens eine Anordnung zur automatischen Steuerung der Pflückhöhe umfasst.

8. Vorrichtung gemäß Anspruch 7, **dadurch gekennzeichnet, dass** die Anordnung zur automatischen Steuerung der Pflückhöhe berührungslos messende Sensoren wie Ultraschall- oder Lasersensoren und/oder mindestens ein Pendel (12) in Kombination mit mindestens einer Vorrichtung zur Winkelmessung umfasst.

9. Vorrichtung gemäß einem der vorangehenden Ansprüche, **dadurch gekennzeichnet, dass** sie weiterhin Mittel zum Transport von Pflanzenteilen, die keine Blüten sind (3), aus der Vorrichtung heraus umfasst.

10. Vorrichtung gemäß einem der vorangehenden Ansprüche, **dadurch gekennzeichnet, dass** sie weiterhin Mittel zum Transport der Blüten (5) in eine Sammelvorrichtung umfasst.

11. Vorrichtung gemäß einem der Ansprüche 9 oder 10, **dadurch gekennzeichnet, dass** die Mittel zum Transport Förderschnecken (9), Gebläse (10) und/oder Gurtband-förderer umfassen.

12. Vorrichtung gemäß einem der vorangehenden Ansprüche, **dadurch gekennzeichnet, dass** an der rotierbaren Pflücktrommel Zinken (11) angebracht sind.

13. Vorrichtung gemäß einem der vorangegangenen Ansprüche, **dadurch gekennzeichnet, dass** sie weiterhin eine Antriebsvorrichtung umfasst oder mit einer Antriebsvorrichtung koppelbar ist.

14. Verfahren zum Pflücken von Blütenpflanzen unter Verwendung einer Vorrichtung gemäß einem der Ansprüche 1 bis 13, wobei man
a) die Pflücktrommel mit einer Drehzahl oberhalb der Grenzdrehzahl zur Rotation bringt, wobei die Grenzdrehzahl die Drehzahl der Pflücktrommel ist, bei welcher die auf die Blüte einwirkende, durch die Rotation der Trommel erzeugte Zentrifugalkraft größer ist, als die auf die Blüte wirkende Erdanziehungskraft,
b) den Blütenhorizont mit der Pflückkammanordnung (1) mit dem voreingestellten Zwischenraum durchfährt,
c) die Stängel der in der Pflückkammanordnung (1) befindlichen Blüten abschert, indem man den Zwischenraum in der Pflückkammanordnung verringert,
d) auf die aus der Pflückkammanordnung (1) zu entfernenden Blüten (5) eine Kraft ausübt, mit der die Wirkung der Zentrifugalkraft beendet wird und
e) die Blüten (5) innerhalb der Vorrichtung auffängt.

15. Verfahren gemäß Anspruch 14, **dadurch gekennzeichnet, dass** man vor und/oder während der Durchführung des Schritts b) den Abstand der Pflückkammanordnung (1) vom Boden einstellt.

## Claims

1. Device for picking flowering plants comprising at least one rotatable picking drum and at least one device for controlling the trajectory of the blossoms, **characterized in that** the device
a) comprises at least one picking comb arrangement (1) arranged on the lateral area of the picking drum in direction towards the axis of rotation of the picking drum,
wherein each picking comb arrangement (1) comprises two collateral sliding comb bars (1 a, 1 b) arranged on top of each other and in parallel direction to each other towards the axis of rotation of the picking drum,
wherein the comb bars (1 a, 1 b) are arrangable essentially congruent on top of each other or offset in respect to each other,
and that the spacing in between the teeth of the picking comb arrangement (1) is presetable and changeable in dependence on the angle of rotation of the rotatable picking drum in such a way that the preset spacing reduces due to circulation of the drum and rearranges to the preset spacing,
and the device further ,
b) comprises at least one arrangement (8) for collecting the blossoms, and
c) that the at least one device for controlling the trajectory of the blossoms is an arrangement for controlling the trajectory of the blossoms of the at least one picking comb arrangement (1).

2. Device, according to claim 1, **characterized in that** the set angle between the picking comb arrangement (1) arranged on the picking drum and the picking drum is adjustable and that the picking comb arrangement (1) is lockable in such an adjusted position.

3. Device, according to claim 1 or 2, **characterized in that** the picking drum comprises more than one drum segment arranged on the same axis.

4. Device, according to any of the previous claims, **characterized in that** the comb bars (1 a, 1 b) are fixable in a preset position by means of an adjustable arrestor.

5. Device, according to any of the previous claims, **characterized in that** one comb bar (1 a, 1 b) or both comb bars (1 a, 1 b) is respectively are movable from and back to the preset position by means of an axial cam guide and retaining spring.

6. Device, according to any of the previous claims, **characterized in that** the device for controlling the trajectory of the blossoms comprises a mechanical cleaner, a device for producing low pressure and/or overpressure, a guide blade (7) or a combination thereof.

7. Device, according to any of the previous claims, **characterized in that** the device comprises at least one arrangement for automatically controlling the picking height.

8. Device, according to claim 7, **characterized in that** the arrangement for automatically controlling the picking height comprises contactless measuring sensors such as ultrasound or laser sensors and/or at least one pendulum (12) in combination with at least one device for angular measurement.

9. Device, according to any of the previous claims, **characterized in that** it further comprises means for transporting parts of plants which are no blossoms (3) out of the device.

10. Device, according to any of the previous claims, **characterized in that** it further comprises means for transporting the blossoms (5) into a collection arrangement.

11. Device, according to any of the claims 9 or 10, **characterized in that** the means for transporting comprise screw-conveyors (9), blowers (10) and/or belt conveyors.

12. Device, according to any of the previous claims, **characterized in that** teeth (11) are arranged on the rotatable picking drum.

13. Device, according to any of the previous claims, **characterized in that** it further comprises a drive unit or that it is coupleable to a drive unit.

14. Method for picking flowering plants using a device according to any of the claims 1 to 13, wherein one
a) brings the picking drum to rotation with a driving speed above the ceiling speed, whereas the ceiling speed is the driving speed of the picking drum whereby the centrifugal force, caused by the rotating picking drum acting on the flower is higher than the gravitational force acting on the flower,
b) passes through the blossom horizon with the preset spacing of the picking comb arrangement (1),
c) shears off the caulis of the blossoms present inside the picking comb arrangement (1) by reducing the spacing of the picking comb arrangement,
d) exerts a force on the blossoms (5) to be withdrawn from the picking comb arrangement (1) which stops the acting of the centrifugal force and
e) collects the blossoms (5) within the device.

15. Method, according to claim 14, **characterized in that** one adjusts the distance of the picking comb arrangement to the ground before and/or while performing step b).

## Revendications

1. Dispositif destiné à la cueillette de plantes à fleurs, comprenant au moins un tambour de cueillette rotatif et au moins un agencement pour contrôler la trajectoire de chute des fleurs,
**caractérisé en ce que** le dispositif comprend
a) au moins un système de peignes de cueillette (1), disposé sur la surface d'enveloppe du tambour de cueillette dans le sens de l'axe de rotation du tambour de cueillette,
chaque système de peignes de cueillette (1) comprenant deux barres à peigne (1a, 1b) disposées l'une sur l'autre dans le même sens et déplaçables parallèlement l'une à l'autre dans le sens de l'axe de rotation du tambour de cueillette,
les barres à peigne (1a, 1 b) pouvant être disposées l'une sur l'autre avec un recouvrement sensiblement identique ou bien de façon décalée l'une par rapport à l'autre,
et **en ce que** l'espace entre les dents du système de peignes de cueillette (1) est préréglable et varie en fonction de l'angle de rotation du tambour de cueillette rotatif, de telle sorte que l'espace préréglé diminue lors d'une rotation du tambour pour ensuite reprendre l'espace préréglé,
et le dispositif comprend en outre
b) au moins un agencement (8) pour collecter les fleurs,
et
c) ledit au moins un agencement pour contrôler la trajectoire des fleurs est un agencement pour contrôler la trajectoire des fleurs qui proviennent dudit au moins un système de peignes de cueillette (1).

2. Dispositif selon la revendication 1, **caractérisé en ce que** l'angle d'inclinaison entre le système de peignes de cueillette (1) disposé sur le tambour de cueillette et le tambour de cueillette peut être réglé et **en ce que** le système de peignes de cueillette (1) peut être arrêté dans cette position réglée.

3. Dispositif selon la revendication 1 ou 2, **caractérisé en ce que en ce que** le tambour de cueillette comprend plus d'un segment de tambour sur le même axe.

4. Dispositif selon l'une des revendications précédentes, **caractérisé en ce que** les barres à peigne (1a, 1b) peuvent être fixées dans la position préréglable au moyen d'une butée ajustable.

5. Dispositif selon l'une des revendications précédentes, **caractérisé en ce que** l'une des barres à peigne (1a, 1b) ou les deux barres à peignes (1a, 1 b) peuvent être amenées hors de la position préréglable et de nouveau dans celle-ci au moyen d'un guidage axial à came et d'un ressort de rappel.

6. Dispositif selon l'une des revendications précédentes, **caractérisé en ce que** l'agencement pour commander la trajectoire de chute des fleurs comprend un racloir mécanique, un dispositif pour générer une dépression et/ou une surpression, une aube directrice (7) ou une combinaison de ceux-ci.

7. Dispositif selon l'une des revendications précédentes, **caractérisé en ce que** le dispositif comprend au moins un agencement de commande automatique de la hauteur de cueillage.

8. Dispositif selon la revendication 7, **caractérisé en ce que** l'agencement de commande automatique de la hauteur de cueillage comprend des capteurs de mesure sans contact, tels que des capteurs à ultrason ou à laser, et/ou au moins un pendule (12) en combinaison avec au moins un dispositif de mesure angulaire.

9. Dispositif selon l'une des revendications précédentes, **caractérisé en ce qu'**il comprend en outre des moyens pour transporter hors du dispositif des parties de plantes qui ne sont pas des fleurs.

10. Dispositif selon l'une des revendications précédentes, **caractérisé en ce qu'**il comprend en outre des moyens pour transporter les fleurs (5) dans un dispositif de collecte.

11. Dispositif selon l'une des revendications 9 ou 10, **caractérisé en ce que** les moyens de transport comprennent des vis sans fin (9), des soufflantes (10) et/ou des convoyeurs à bande souple.

12. Dispositif selon l'une des revendications précédentes, **caractérisé en ce que** des pointes (11) sont montées sur le tambour de cueillette rotatif.

13. Dispositif selon l'une des revendications précédentes, **caractérisé en ce qu'**il comprend en outre un dispositif d'entraînement ou peut être couplé à un dispositif d'entraînement.

14. Procédé destiné à la cueillette de plantes à fleurs à l'aide d'un dispositif selon l'une des revendications 1 à 13, dans lequel
a) on entraîne en rotation le tambour de cueillette avec une vitesse de rotation au-dessus de la vitesse limite de rotation, la vitesse limite de rotation étant la vitesse de rotation du tambour de cueillette à laquelle la force centrifuge agissant sur la fleur et générée par la rotation du tambour est supérieure à la force d'attraction terrestre agissant sur la fleur,
b) on parcourt l'horizon de fleurs avec le système de peignes de cueillette (1) à l'espace préréglé,
c) on cisaille les tiges des fleurs se trouvant dans le système de peignes de cueillette (1) en réduisant l'espace dans ce système,
d) on exerce sur les fleurs (5) devant être enlevées du système de peignes de cueillette (1) une force qui permet de mettre fin à l'action de la force centrifuge, et
e) on recueille les fleurs (5) à l'intérieur du dispositif.

15. Procédé selon la revendication 14, **caractérisé en ce qu'**on règle avant et/ou pendant l'exécution de l'étape b) la distance du système de peignes de cueillette (1) par rapport au sol.
